# EUROPEAN PATENT SPECIFICATION

(11) **EP 2 278 184 B1**
(45) Date of publication and mention of the grant of the patent: **08.10.2014**
(21) Application number: 10007433.5
(22) Date of filing: 19.07.2010
(51) Int. Cl.: F16F 9/12

(54) **Adjustable damper device**
Einstellbare Dämpfervorrichtung
Dispositif d'amortisseur ajustable

(30) Priority: 20.07.2009 NL 1037131
(43) Date of publication of application: 26.01.2011
(73) Proprietor: Profunda B.V., 8304 AJ Emmeloord (NL)
(72) Inventor: Haug, Wendelin, 72393 Burladingen/Hermannsdorf (DE)
(74) Representative: Klooster, Jan Hanri

(56) References cited:
- WO-A1-88/10377
- GB-A- 2 282 863
- JP-A- 63 067 437
- US-A- 4 938 322
- US-A- 5 301 775

## Description

The invention relates to an adjustable damper device comprising:
- a housing provided with an interior space for receiving a dampening fluid;
- a rotor extending into the interior space of the housing and being disposed rotatably within the housing;
- the interior space being provided with:
   - a first lamella bundle comprising at least one rotary lamella being connected with the rotor and essentially radially extending relatively to the rotor and being rotatable relatively to the housing,
   - a second lamella bundle comprising at least one sliding lamella being connected with the housing and essentially extending parallely to the rotary lamella,
- an adjustment device for radially displacing the second lamella bundle relatively to the rotor.
wherein the second lamella bundle being adjustable between:
- a damping position whereby a substantial portion of the surface area of the sliding lamella is axially positioned adjacently with respect to the surface area of the rotary lamella, and
- a free position whereby a substantial portion of the surface area of the sliding lamella is radially positioned distantly with respect to the surface area of the rotary lamella.

Such a damper device is known in the art from Japanese patent application 63067437. The amount of viscous drag is proportional to the surface area and the clearance of the adjacent lamellas, which are facing each other. By adjusting the effective area and the effective clearance between the lamellas of the first lamella bundle mounted upon the rotary shaft or rotor and the second lamella bundle mounted upon the housing or stator, the amount of torque can be easily and rapidly adjusted or varied.

A lamella is a flat object or a part thereof, often having an elongated shape but a lamella may also be a circular flat disk or another flat object having a different shape, whether or not provided with openings or slits.

Such dampers are also often applied for damping the motion of an opening or closing door or sliding door. This type of damper device is also used as a damper on the drive chains of fences, gates or garage doors. The known damper device has the disadvantage that the degree of damping can not be easily adapted to the application, the need and/or the dynamics, forces and weights of the system to be dampened, such as a fence or garage, so for each dampening rate a separate damper device must be produced. Because of the cylindrical shape of the housing, and the symmetrical arrangement of the rotor within the housing the range of adjustment is too small. Therefore two bundles of adjustable lamellas each with an adjustment device are needed, making the damper device complicated and costly to manufacture.

There is also a need for a damper device, which combines a wide range of dampening settings with a low axial height.

Object of the invention is, therefore, to provide for an adjustable damper device without any such aforementioned disadvantages.
A further object is to provide for a damper device that
- is simple and may be manufactured at low cost,
- is easily adjustable and is having a large dampening range,
- is having a low axial height.

Objects of the invention are achieved with the sliding lamella being provided with a recess having a size corresponding to the diameter of the rotor, so that parts of the sliding lamella are displaceable past the rotor.

In an advantageous embodiment in the damping position the surface area of the sliding lamella is completely overlapping the surface area of the rotary lamella in axial direction.

A broad dampening range is obtained by making the sliding lamella displaceable between a substantially overlapping position nearby or around the rotor and a basically radially displaced position within the interior space of the housing, having little or no overlap. Furthermore a relatively flat box type of housing is herewith possible having a low axial height. Moreover this damper device comprises less complicated parts and may be manufactured at lower costs.

A broad dampening range Is obtained for the damper device, by making is possible for the sliding lamellas to completely overlap the rotary lamellas. By means of the recesses in the sliding lamellas is it possible for the sliding lamella to completely overlap both sides of the rotary lamellas with respect to the rotor.

A special embodiment is **characterized in that** the sliding lamella is radially adjustable relative to the rotor or the sliding lamella is tiltable towards and from the rotor.
The large (radial) adjustability of the sliding lamellas allows for a compact construction while maintaining a broad range of damping. By tilting the lamella to and from the rotor, the same broad range of dampening strength and radial adjustability is achieved.

Preferably the first lamella bundle is configured by two or more rotary lamellas which are axially parallelly mounted upon the rotor having a rotary lamella clearance distance such that the sliding lamellas of the second lamella bundle may be introduced into the rotary lamella clearance.
With these features the shear or viscous forces between the dampening liquid and the rotary lamellas is increased by creating two damping clearances in each rotary lamella clearance by interposing a sliding lamella between two rotary lamellas, Furthermore increasing the overlap between the rotary lamellas and the sliding lamella increases the surface area of each clearance and therewith the dampening strength.

The embodiment is preferred whereby the sliding lamella is formed by two or more sliding lamella segments; preferably the sliding lamella segments are circle segments, which form circular disks in the damping position.
By dividing the sliding lamellas into segments a broad damping range is obtained, for example when the segments form a contiguous lamella so that a maximum shear force and damping can be achieved.

Preferably the second lamella bundle is provided with a connection element, like a connection plate, where upon the sliding lamellas are essentially parallelly mounted having a sliding lamella clearance.
By using a connecting element to mutually interconnect the sliding lamellas the lamella bundle can be adjusted as one piece and may be easily completely inserted into the rotary lamella bundle for maximum damping. It is also possible, however, to adjust the single lamellas independently.

Particularly the adjustment device is an adjusting axis, which extends outside the housing, by which the second lamella bundle may be radially adjusted, with respect to the rotor.

More particularly the adjusting axis and the connection plate of the second lamella bundle are provided with cooperating threading such that by rotating the adjustment axis the second lamella bundle is radially displaced with respect to the rotor within the interior space of the housing.

Alternatively, the adjusting device and the connecting plate of the second lamella bundle can alternatively be provided with a pushing/pulling mechanism without a thread.
This simple and easy to manufacture adjustment axis renders, for example by means of threads, the sliding lamella easily adjustable, with little chance of leakage of the dampening fluid.

Advantageously is the embodiment wherein the rotor with the first lamella bundle is mounted adjacently to the side wall of the interior space of the housing and the second lamella bundle with the connection element is mounted adjacently to the opposite side wall.
Particularly the first lamella bundle is formed by circular rotary lamellas and the adjacent side wall is conformingly concavely circularly shaped and the sliding lamellas of the second lamella bundle at their outer ends are also provided with a conformingly circular shape.
With uniformly shaped rotary lamellas and sliding lamellas, whereby the side walls are adapted to this shape it is possible to provide for a compact, inexpensive to produce, damping device having a broad dampening range. The connection element may also be concavely shaped, so that in the damping position of the damping device according to the invention, the arrangement of rotor and lamellas is conforming to a traditional damper having a cylindrically shaped housing or stator.

The invention is further explained by means of a drawing of an embodiment of the adjustable device, whereby features and other advantages will come forward
Fig.1A shows In side view in cross-section, the adjustable damper device according to the invention in its free position;
Fig.1B shows in top view, in cross-section, the adjustable damper device of Fig.1A;
Fig.2A shows the adjustable damper device of Fig.1A in damping position;
Fig.2B shows the adjustable damper device of Fig.2B in damping position,
Fig.3A shows in a schematic top view of a rotary lamella and a sliding lamella;
Fig.3B shows in a schematic top view two sliding lamella segments;
Fig.3C shows in a schematic top view a fixed and adjustable sliding lamella segment;
Fig.3D shows in a schematic top view tiltingly displaceable sliding lamella segments;
Fig.4A shows in a schematic top view radially displaceable sliding lamella segments in damping position;
Fig.4B shows sliding lamella segments of Fig.4B in free position;
Fig.4C shows a variant of Fig.4A having a large rotary lamella;
Fig.4D shows the sliding lamella segments of Fig.4C in free position;
Fig.5A shows in side view the adjustable damper device with housing and adjustment device in free position;
Fig.5B shows in side view, in cross-section, the adjustable damper device of Fig.5A;
Fig.5C shows in top view, in cross-section, the adjustable damper device of Fig. 5A;
Fig.6A - Fig.6C show the adjustable damper device of Fig.5A - 5C in damping position.

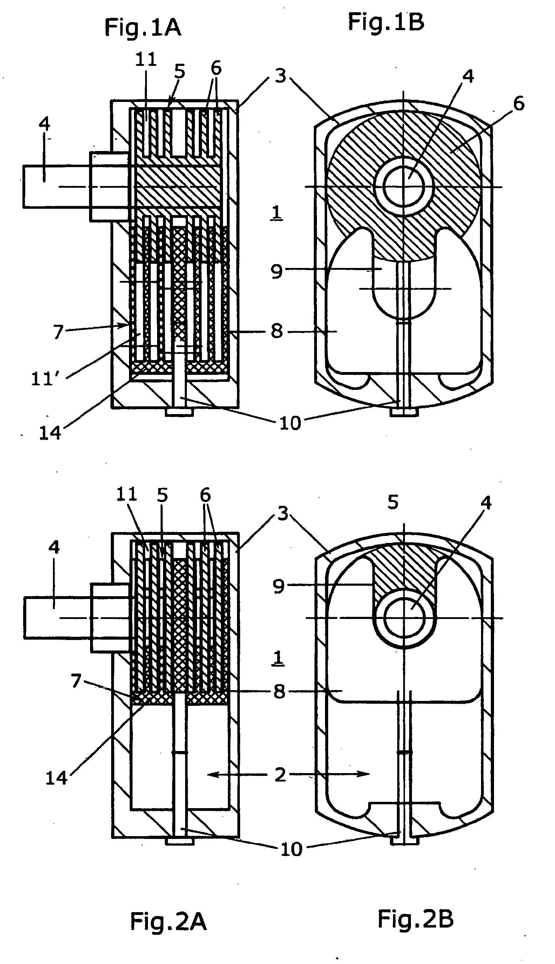

Fig.1A shows in cross-section in side view the adjustable damper device 1 according to the invention having housing 3 and a rotary shaft or rotor 4, extending out of the housing. This rotor may be connected to an object to be dampened, like a door, with a gear-wheel or sprocket so that the rotation - or a linear movement converted into a rotary movement - may be dampened. For that purpose the interior space 2 (see Fig.1B) is provided with a dampening liquid like silicon oil. In the embodiment shown in Fig.1A the rotor 4 within the interior space 2 of the housing 3 is provided with an axel stub or shaft bearing, alternatively this rotor may also be passed through the opposite wall or through both walls. Rotor 4 is provided with a lamella bundle 5, which comprises at least one rotary lamella 6. Preferably rotary lamella 6 is a flat object or small plate having a constant diameter or thickness, but may also be provided with an alternative different shape. In the shown embodiment the first lamella bundle 5 comprises six rotary lamellas, extending radially with respect to the rotor 4 and axially being fixedly interconnected at a regular mutual distance or clearance with rotor 4. When rotor 4 is rotated, for example by a closing or opening door, the rotary lamellas will be rotated and moved through the dampening oil, thereby generating shear forces and torque on the axis so that the rotary movement is dampened. In order to increase the dampening strength and the shear forces, the second lamella bundle 7, which is non rotatingly fixedly connected with the housing, be radially displaced in the direction of the rotor so that the sliding lamellas 8 of the second lamella bundle 7 will overlap partially (or completely) the rotary lamellas 6. In the embodiment shown the adjusting device 10 is an adjustment axis by which the whole second lamella bundle 7 may be displaced in the direction of the rotor 4. As a result is it possible to adjust continuously variable the dampening strength of the damper device 1. In Fig.1A is furthermore shown that rotary lamellas 6 are provided with a mutual clearance 11, whereby the clearance is provided with such a dimension, that the sliding lamellas 8 may be inserted or interposed between two rotary lamellas.

In Fig.1B is shown in cross-section in top view the adjustable damper 1 of Fig.1A having a disk-shaped rotary lamella 6 and a sliding lamella 8 in the extreme free position having the lowest dampening strength. The adjustment axis 10 is connected with sliding lamella 8 in such a way, that at the outside of the housing the sliding lamella 8 may be displaced or shifted in the direction of the rotor 4.

In Fig.2A - 2B the adjustable damper device 1 of Fig. 1A - 1B is shown with second lamella bundle 7 in its extreme damping position. The sliding lamellas 8 substantially, for a major part, overlap the rotary lamellas 5. Therefore the sliding lamellas are provided with recess 9 having a dimension, which corresponds with the diameter of the rotor 4, so that parts of the sliding lamella extend past the rotor 4. The lamellas of the second lamella bundle 7 are connected by means of a connection element 14; in the embodiment shown the connection element is a connection plate 14, which is provided at the backside of the second lamella bundle 7, thereby mutually parallely connecting the sliding lamellas.

Preferably the sliding lamellas 8 are mutually parallely mounted onto connection element 14 configuring a mutual clearance distance 11'. This clearance distance corresponds preferably with the dimensions of clearance 11 of the first lamella bundle 5 so that the lamella bundles may easily be stacked, interposed or be slid together.

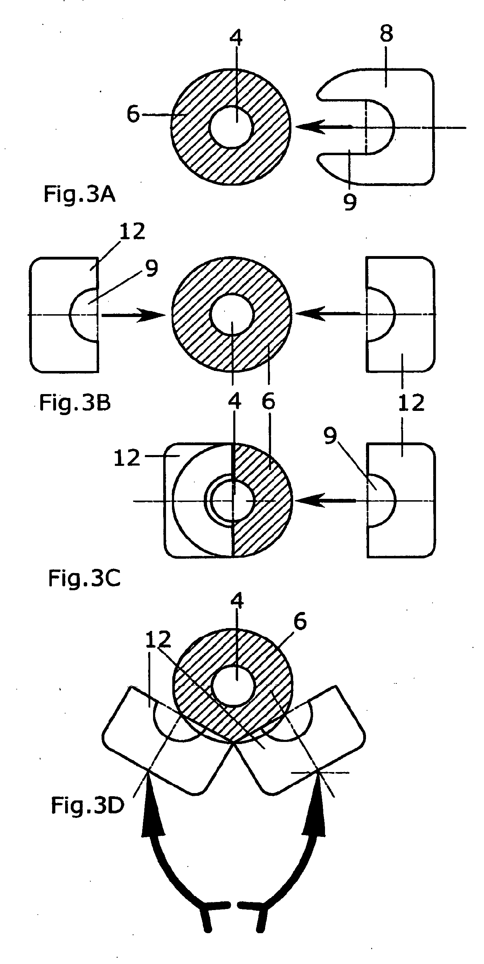

Fig.3A shows schematically an embodiment according to the invention having a disk shaped rotary lamella 6 mounted upon rotor 4 and a radially adjustable sliding lamella 8, provided with a recess 9 corresponding to the dimensions (diameter) of the rotor 4.
Fig.3B shows an alternative embodiment having two sliding lamella segments 12 on both sides of rotor 4. The sliding lamella segments 12 are each radially adjustable with respect to the rotor 4 and may each be provided with a circular recess 9 so that a complete overlap of the surface of the rotary lamella 6 by the surface of the sliding lamella segments is possible.
Fig.3C shows an alternative embodiment of the example of Fig.3B whereby the left sliding lamella segment 12 is fixed and not adjustable and the right sliding lamella 12 is radially adjustable and displaceable in order to be able to adjust the dampening strength of the damper.
Fig.3D shows an alternative embodiment, whereby the sliding lamella segments 12 of Fig.3B & 3C are tilted towards and from the rotor 4, so that in this way a complete overlap of the rotary lamella 6 is also possible.

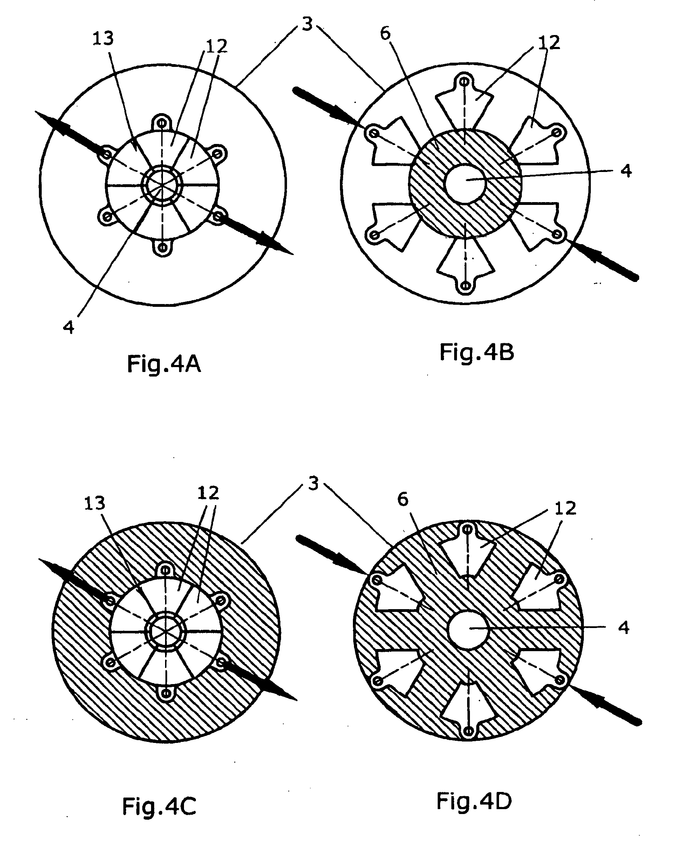

Fig.4A - 4D show an alternative of the adjustable damper device 1 according to the invention having housing 3 provided with a circular cross-section. The sliding lamella 8 is subdivided into six sliding lamella segments 12 which may each be radially displaced with respect to the rotor 4. In Fig.4A is shown how in the damping position the sliding lamella segments 12 constitute a circular disk 13 around rotor 4. With alternative solution it is also possible to cover or overlap the entire surface area of the rotary lamella 6. The side of the sliding lamella segment, which abuts or contacts the rotor 4, is provided with a concave circular shape, corresponding to the outward shape of the rotor 4. In Fig.4C en 4D is shown that rotary lamella 6 is extending over the entire cross-section of the housing 3, so that the sliding lamellas 12 cannot be adjusted or displaced out of axial position adjacently to the surface area of the rotary lamella 6.

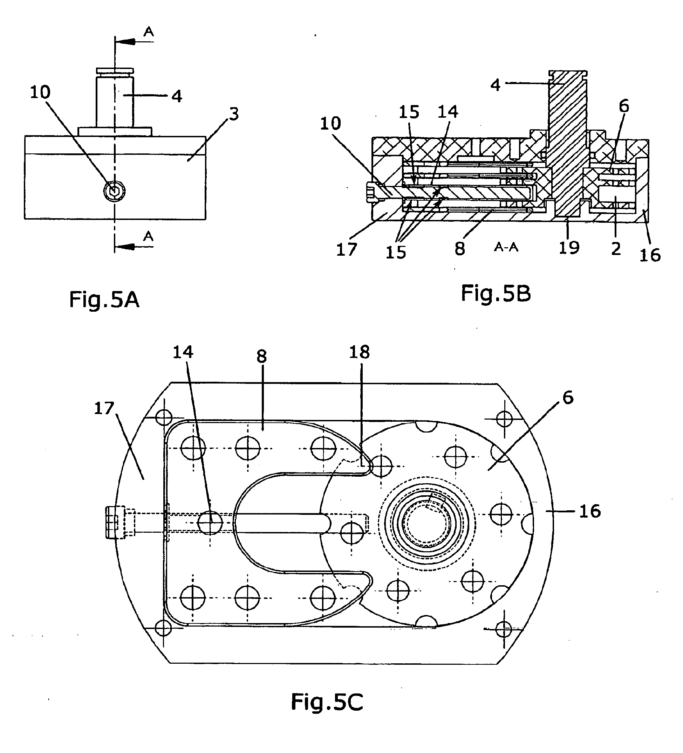

Fig.5A and cross-section 5A en 5B show more in detail the advantageous embodiment of the invention of Fig.1A - 2B with a, at least basically, square housing 3, having two cylindrical convex side walls 16, 17 and a rotor 4, which extends out of from the upper side of the housing 9 and which is supported on bearings upon the lower wall 19. The adjusting mechanism is an adjusting axis 10 which by means of cooperating threading 15 and rotating thereof adjusts the second lamella bundle 8 between the rotary lamellas 6 of the first lamella bundle. The rotor 4 is positioned onto the right hand side nearby side wall 16 and the second lamella bundle 7 is positioned nearby the opposite side wall 17. The rotary lamellas 6 are circular disks and the side wall 16 is accordingly provided with a concave circular shape so that the rotary lamellas may closely fit onto the wall. The sliding lamellas 8 of the second lamella bundle are at their outer end also provided with a conforming circular shape.

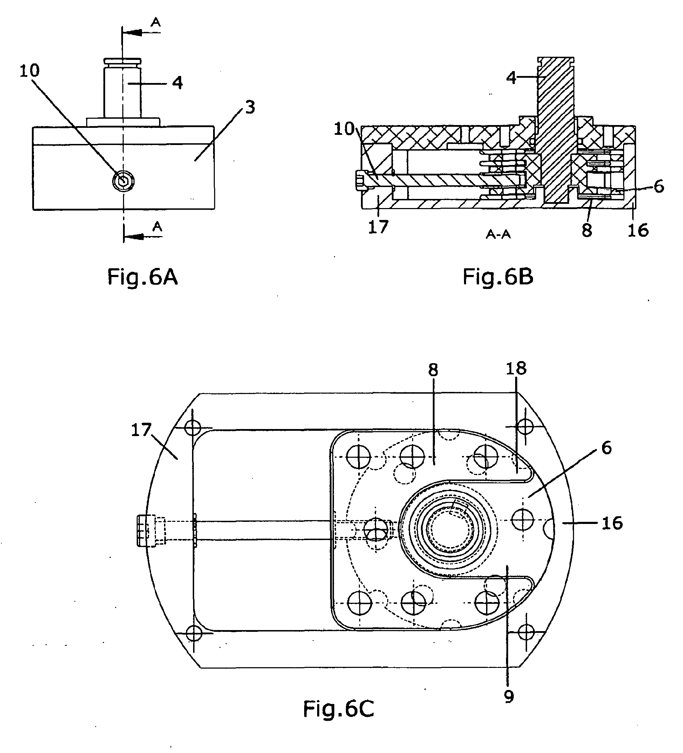

Fig 6A and cross-sections 6A en 6B show in more detail the embodiment of Fig.5A - 5C in closed, damping position, whereby the overlap between the rotary lamella 6 and the sliding lamella 8 is at its maximum. The sliding lamella is provided with a recess 9 for receiving the rotor 4, so that the outer end 18 of the sliding lamella also closely fits onto the side wall 16 of the housing 3.

## Claims

1. Adjustable damper device (1) comprising:
- a housing (3) provided with an interior space (2) for receiving a dampening fluid;
- a rotor (4) extending into the interior space (2) of the housing (3) and being disposed rotatably within the housing (3);
- the interior space (2) being provided with:
- a first lamella bundle (5) comprising at least one rotary lamella (6) being connected with the rotor (4) and essentially radially extending relatively to the rotor (4) and being rotatable relatively to the housing (3),
- a second lamella bundle (7) comprising at least one sliding lamella (8) being connected with the housing (3) and essentially extending parallely to the rotary lamella (6);
- an adjustment device (10) for radially displacing the second lamella bundle (7) relatively to the rotor (4);
the second lamella bundle (7) being adjustable between:
- a damping position whereby a substantial portion of the surface area of the sliding lamella (8) is axially positioned adjacently with respect to the surface area of the rotary lamella (6), and
- a free position whereby a substantial portion of the surface area of the sliding lamella (8) is radially positioned distantly with respect to the surface area of the rotary lamella (6),
**characterized, in that** the sliding lamella (8) is provided with a recess (9) having a size corresponding to the diameter of the rotor (4), so that parts of the sliding lamella (8) are displaceable past the rotor (4).

2. Adjustable damper device according to claim 1, wherein in the damping position the surface area of the sliding lamella (8) is completely overlapping the surface area of the rotary lamella (6) in axial direction.

3. Adjustable damper device according to anyone of the preceding claims 1 - 2, wherein the sliding lamella (8) is radially adjustable relative to the rotor (4) or the sliding lamella is tiltable towards and from the rotor (4).

4. Adjustable damper device according to anyone of the preceding claims 1 - 3, wherein the first lamella bundle (5) is configured by two or more rotary lamellas (6) which are axially parallelly mounted upon the rotor (4) having a rotary lamella clearance distance (11) such that the sliding lamellas (8) of the second lamella bundle (7) may be introduced into the rotary lamella clearance (11).

5. Adjustable damper device according to anyone of the preceding claims 1 - 4 wherein the sliding lamella (8) is formed by two or more sliding lamella segments (12), preferably the sliding lamella segments (12) are circle segments which form circular disks (13) in the damping position.

6. Adjustable damper device according to anyone of the preceding claims 1 - 5, wherein the second lamella bundle (7) is provided with a connection element, like a connection plate (14), where upon the sliding lamellas (8) are essentially parallelly mounted having a sliding lamella clearance (11').

7. Adjustable damper according to claim 6, wherein the adjustment device (10) is an adjusting axis, which extends outside the housing (3), by which the second lamella bundle (7) may be radially adjusted, with respect to the rotor (4).

8. Adjustable damper device according to claim 7, wherein the adjusting axis (10) and the connection plate (14) of the second lamella bundle (7) are provided with cooperating threading (15) such that by rotating the adjustment axis (10) the second lamella bundle (7) is radially displaced with respect to the rotor (4) within the interior space (2) of the housing (3).

9. Adjustable damper device according to anyone of the preceding claims 1 - 8, wherein the rotor (4) with the first lamella bundle (5) is mounted adjacently to the side wall (16) of the interior space (2) of the housing (3) and the second lamella bundle (7) with the connection element (14) is mounted adjacently to the opposite side wall (17).

10. Adjustable damper device according to claim 9, wherein the first lamella bundle (5) is formed by circular rotary lamellas (6) and that the adjacent side wall (16) is conformingly concavely circularly shaped and that the sliding lamellas (8) of the second lamella bundle (7) at their outer ends (18) are also provided with a conformingly circular shape.

11. Adjustable damper device according to claim 6, wherein the single lamellas can also be adjusted independently.

12. Adjustable damper device according to claim 8, wherein the adjusting axis (10) and the connection plate (14) of the second lamella bundle (7) can alternatively be provided with a pushing/pulling mechanism without a thread.

## Patentansprüche

1. Einstellbare Dämpfervorrichtung (1), die umfasst:
- ein Gehäuse (3), das mit einem inneren Raum (2) zur Aufnahme eines dämpfenden Fluids versehen ist;
- einen Rotor (4), der sich in den inneren Raum (2) des Gehäuses (3) erstreckt und innerhalb des Gehäuses (3) drehbar angeordnet ist;
- wobei der innere Raum (2) versehen ist mit:
- einem ersten Lamellenbündel (5), das mindestens eine Drehlamelle (6) umfasst, die mit dem Rotor (4) verbunden ist und sich im Wesentlichen relativ zu dem Rotor (4) radial erstreckt und relativ zu dem Gehäuse (3) drehbar ist,
- einem zweiten Lamellenbündel (7), das mindestens eine Gleitlamelle (8) umfasst, die mit dem Gehäuse (3) verbunden ist und sich im Wesentlichen zu der Drehlamelle (6) parallel erstreckt;
- eine Einstellvorrichtung (10), um das zweite Lamellenbündel (7) relativ zu dem Rotor (4) radial zu verschieben;
wobei das zweite Lamellenbündel (7) einstellbar ist zwischen:
- einer Dämpfungsposition, wodurch ein wesentlicher Abschnitt des Oberflächenbereichs der Gleitlamelle (8) in Bezug auf den Oberflächenbereich der Drehlamelle (6) benachbart axial positioniert ist, und
- einer freien Position, wodurch ein wesentlicher Abschnitt des Oberflächenbereichs der Gleitlamelle (8) in Bezug auf den Oberflächenbereich der Drehlamelle (6) in einem Abstand radial positioniert ist,
**dadurch gekennzeichnet, dass** die Gleitlamelle (8) mit einer Aussparung (9), die eine Größe entsprechend dem Durchmesser des Rotors (4) aufweist, versehen ist, so dass Teile der Gleitlamelle (8) vorbei an dem Rotor (4) verschiebbar sind.

2. Einstellbare Dämpfervorrichtung nach Anspruch 1, wobei in der Dämpfungsposition der Oberflächenbereich der Gleitlamelle (8) den Oberflächenbereich der Drehlamelle (6) in axialer Richtung vollständig überlappt.

3. Einstellbare Dämpfervorrichtung nach einem der vorhergehenden Ansprüche 1 bis 2, wobei die Gleitlamelle (8) relativ zu dem Rotor (4) radial einstellbar ist oder wobei die Gleitlamelle in Richtung des Rotors (4) und von dem Rotor (4) kippbar ist.

4. Einstellbare Dämpfervorrichtung nach einem der vorhergehenden Ansprüche 1 bis 3, wobei das erste Lamellenbündel (5) durch zwei oder mehrere Drehlamellen (6) konfiguriert ist, die axial parallel an dem Rotor (4) befestigt sind und einen Drehlamellenabstandszwischenraum (11) derart aufweisen, dass die Gleitlamellen (8) des zweiten Lamellenbündels (7) in den Drehlamellenzwischenraum (11) eingeführt werden können.

5. Einstellbare Dämpfervorrichtung nach einem der vorhergehenden Ansprüche 1 bis 4, wobei die Gleitlamelle (8) durch zwei oder mehrere Gleitlamellensegmente (12) gebildet ist, wobei die Gleitlamellensegmente (12) vorzugsweise Kreissegmente sind, die kreisförmige Scheiben (13) in der Dämpfungsposition bilden.

6. Einstellbare Dämpfervorrichtung nach einem der vorhergehenden Ansprüche 1 bis 5, wobei das zweite Lamellenbündel (7) mit einem Verbindungselement versehen ist, ähnlich wie eine Verbindungsplatte (14), an der die Gleitlamellen (8) im Wesentlichen parallel mit einem Gleitlamellenzwischenraum (11') befestigt sind.

7. Einstellbarer Dämpfer nach Anspruch 6, wobei die Einstellvorrichtung (10) eine Stellachse ist, die sich außerhalb des Gehäuses (3) erstreckt und durch die das zweite Lamellenbündel (7) in Bezug auf den Rotor (4) radial eingestellt werden kann.

8. Einstellbare Dämpfervorrichtung nach Anspruch 7, wobei die Stellachse (10) und die Verbindungsplatte (14) des zweiten Lamellenbündels (7) mit einem mitwirkenden Gewinde (15) versehen sind derart, dass durch Drehen der Stellachse (10) das zweite Lamellenbündel (7) in Bezug auf den Rotor (4) innerhalb des inneren Raums (2) des Gehäuses (3) radial verschoben ist.

9. Einstellbare Dämpfervorrichtung nach einem der vorhergehenden Ansprüche 1 bis 9, wobei der Rotor (4) mit dem ersten Lamellenbündel (5) zu der Seitenwand (16) des inneren Raumes (2) des Gehäuses (3) benachbart befestigt ist und das zweite Lamellenbündel (7) mit der Verbindungsplatte (14) zu der gegenüberliegenden Seitenwand (17) benachbart befestigt ist.

10. Einstellbare Dämpfervorrichtung nach Anspruch 9, wobei das erste Lamellenbündel (5) von kreisförmigen Drehlamellen (6) gebildet ist und dass die benachbarte Seitenwand (16) entsprechend konkav kreisförmig gebildet ist und dass die Gleitlamellen (8) des zweiten Lamellenbündels (7) an ihren äußeren Enden (18) auch mit einer entsprechenden kreisförmigen Gestalt versehen sind.

11. Einstellbare Dämpfervorrichtung nach Anspruch 6, wobei die einzelnen Lamellen unabhängig eingestellt werden können.

12. Einstellbare Dämpfervorrichtung nach Anspruch 8, wobei die Stellachse (10) und die Verbindungsplatte (14) des zweiten Lamellenbündels (7) alternativ mit einem Schiebe-/Ziehmechanismus ohne ein Gewinde versehen werden können.

## Revendications

1. Dispositif amortisseur réglable (1) comprenant :
- un logement (3) pourvu d'un espace intérieur (2) pour recevoir un fluide d'amortissement ;
- un rotor (4) s'étendant dans l'espace intérieur (2) du logement (3) et étant monté à rotation à l'intérieur du logement (3) ;
- l'espace intérieur (2) étant pourvu de :
- un premier faisceau de lamelles (5) comprenant au moins une lamelle montée à rotation (6) reliée au rotor (4) et s'étendant de façon essentiellement radiale par rapport au rotor (4), et pouvant être pivotée par rapport au logement (2),
- un deuxième faisceau de lamelles (7) comprenant au moins une lamelle montée à coulissement (8) reliée au logement (2) et s'étendant de façon essentiellement parallèle à la lamelle montée à rotation (6) ;
- un dispositif de réglage (10) pour déplacer radialement le deuxième faisceau de lamelles (7) par rapport au rotor (4) ;
le deuxième faisceau de lamelles (7) étant réglable entre :
- une position d'amortissement dans laquelle une partie substantielle de la surface de la lamelle montée à coulissement (8) est positionnée axialement au voisinage de la surface de la lamelle montée à rotation (6), et
- une position libre dans laquelle une partie substantielle de l'aire en surface de la lamelle montée à coulissement (8) est positionnée radialement à distance de la surface de la lamelle montée à rotation (6),
**caractérisé en ce que** la lamelle montée à coulissement (8) est pourvue d'une encoche (9) ayant une taille correspondant au diamètre du rotor (4), de telle sorte que des parties de la lamelle montée à coulissement (8) peuvent être déplacées au-delà du rotor (4).

2. Dispositif amortisseur réglable selon la revendication 1, dans lequel dans la position d'amortissement la surface de la lamelle montée à coulissement (8) chevauche entièrement la surface de la lamelle montée à rotation (6) suivant la direction axiale.

3. Dispositif amortisseur réglable selon l'une quelconque des revendications 1 et 2 précédentes, dans lequel la lamelle montée à coulissement (8) est réglable radialement par rapport au rotor (4) ou la lamelle coulissante est inclinable vers et depuis le rotor (4).

4. Dispositif amortisseur réglable selon l'une quelconque des revendications 1 à 3 précédentes, dans lequel le premier faisceau de lamelles (5) est configuré par au moins deux lamelles montées à rotation (6) qui sont montées parallèlement suivant la direction axiale sur le rotor (4) avec une distance d'espace libre (11) entre lamelles montées à rotation, telle que les lamelles montées à coulissement (8) du deuxième faisceau de lamelles (7) peuvent être introduites dans l'espace libre (11) entre lamelles montées à rotation.

5. Dispositif amortisseur réglable selon l'une quelconque des revendications 1 à 4 précédentes, dans lequel la lamelle montée à coulissement (8) est formée par au moins deux segments (12) de lamelle montée à coulissement, les segments (12) de lamelle montée à coulissement étant de préférence des segments de cercle qui forment des disques circulaires (13) dans la position d'amortissement.

6. Dispositif amortisseur réglable selon l'une quelconque des revendications 1 à 5 précédentes, dans lequel le deuxième faisceau de lamelles (7) est pourvu d'un élément de jonction, comme une plaque de jonction (14), sur laquelle les lamelle montées à coulissement (8) sont montées de façon essentiellement parallèle avec un espace libre (11') entre lamelle montées à coulissement.

7. Amortisseur réglable selon la revendication 6, dans lequel le dispositif de réglage (10) est un axe de réglage qui s'étend à l'extérieur du logement (3) par lequel le deuxième faisceau de lamelles (7) peut être réglé radialement par rapport au rotor (4).

8. Dispositif amortisseur réglable selon la revendication 7, dans lequel l'axe de réglage (10) et la plaque de jonction (14) du deuxième faisceau de lamelles (7) sont pourvus d'un filetage complémentaire (15) de sorte qu'en faisant tourner l'axe de réglage (10) le deuxième faisceau de lamelles (7) est déplacé radialement par rapport au rotor (4) dans l'espace intérieur (2) du logement (3).

9. Dispositif amortisseur réglable selon l'une quelconque des revendications 1 à 9, dans lequel le rotor (4) avec le premier faisceau de lamelles (5) est monté au voisinage d'une paroi latérale (16) de l'espace intérieur (2) du logement (3) et le deuxième faisceau de lamelles (7) avec l'élément de jonction (14) est monté au voisinage de la paroi latérale opposée (17).

10. Dispositif amortisseur réglable selon la revendication 9, dans lequel le premier faisceau de lamelles (5) est formé par des lamelles montées à rotation (6) circulaires, dans lequel la paroi latérale adjacente (16) est de forme circulaire concave complémentaire, et dans lequel les lamelles montées à coulissement (8) du deuxième faisceau de lamelles (7) sont à leurs extrémités extérieures (18) également pourvues d'une forme circulaire complémentaire.

11. Dispositif amortisseur réglable selon la revendication 6, dans lequel les lamelles individuelles peuvent aussi être réglées indépendamment.

12. Dispositif amortisseur réglable selon la revendication 8, dans lequel l'axe de réglage (10) et la plaque de jonction (14) du deuxième faisceau de lamelles (7) peuvent alternativement être pourvus d'un mécanisme de poussée/traction sans filetage.
